# FASCICULE DE BREVET EUROPEEN

(11) **EP 2 477 868 B1**
(45) Date de publication et mention de la délivrance du brevet: **25.06.2014**
(21) Numéro de dépôt: 10765499.8
(22) Date de dépôt: 15.09.2010
(51) Int. Cl.: B61G 5/02, B61B 13/12

(54) **ATTELAGE AVEC ORGANES D'ATTACHE INTEGRES DANS LA BANDE DE ROULEMENT A FRICTION, TRAIN ET CONVOYEUR**
KOPPLER MIT IN DIE REIBUNGSLAUFFLÄCHE INTEGRIERTEN BEFESTIGUNGSELEMENTEN, ZUG UND FÖRDERER
COUPLER WITH ATTACHMENT MEMBERS BUILT INTO THE FRICTION TREAD SURFACE, TRAIN AND CONVEYOR

(30) Priorité: 15.09.2009 FR 0904386
(43) Date de publication de la demande: 25.07.2012
(73) Titulaire: Cinetic Assembly, 77144 Montevrain (FR)
(72) Inventeur: BOULLARD, Vincent, F-77220 Tournan En Brie (FR); MANDONNET, Philippe, F-77700 Serris (FR)
(74) Mandataire: Hirsch & Associés
(86) Numéro de dépôt international: PCT/IB2010/054167
(87) Numéro de publication internationale: WO 2011/033459

(56) Documents cités:
- US-A- 5 209 363
- US-A1- 2009 205 532

## Description

La présente invention concerne un attelage comprenant une bande de roulement, pour galet à friction, ainsi que des organes d'attache intégrés dans la bande de roulement. L'invention concerne en outre un train de palonniers attelés à l'aide de l'attelage. L'invention concerne encore un convoyeur à friction d'un tel train de palonniers.

Dans l'industrie, des solutions de convoyage de lourdes charges sont connues. Les charges sont portées par des palonniers et les palonniers sont convoyés par chaîne ou par friction. Le convoyage par chaîne pose des problèmes de coût d'installation et de maintenance. Le convoyage par chaîne est de plus relativement lent.

Le convoyeur par friction entraîne les palonniers à l'aide de galets à friction. Les galets à friction sont mis en rotation par des moteurs électriques. Dans leur rotation, les galets à friction roulent sur des bandes de roulement disposées sur les palonniers portant les charges. Le convoyeur entraîne les palonniers portant les charges. Lors du roulement, la friction des galets sur la bande de roulement entraîne les palonniers dans la direction de la bande de roulement.

Le convoyage par friction pose des problèmes de multiplication des points d'entraînement, les galets à friction, le long du convoyage. La multiplication des points d'entraînement impacte le convoyage à friction en termes de coût aussi bien en installation qu'en maintenance.

En effet, le convoyage de charges par un convoyeur à friction suppose la présence d'un grand nombre de galets à friction le long du convoyeur. Chaque palonnier doit être entraîné par au moins un galet à friction dans le convoyeur. Ainsi un premier galet à friction roule sur le palonnier jusqu'à ce que le palonnier, ainsi entraîné en convoyage, ait dépassé le premier galet. Le palonnier, pour continuer à être convoyé, doit alors être entraîné par un nouveau galet. La distance maximale entre les galets à friction d'un convoyeur dépend de la longueur d'un palonnier, i.e. le pas d'un palonnier. Cette distance ne peut être supérieure à la longueur du palonnier entraîné alors que le convoyage de palonniers peut être effectué sur de grandes distances. Cette limite de la distance d'espacement entre les galets à friction impose un coût important pour la fabrication et l'utilisation d'un tel système. On attelle alors les palonniers entre eux en un train pour augmenter la distance d'espacement des galets à friction.

Il est cependant souhaitable que les palonniers d'un même train puissent avoir des vitesses différentes durant le convoyage, c'est-à-dire que les différents palonniers puissent être indépendants les uns des autres. Un tel convoyage est utile lorsque les charges convoyées sont des objets fabriqués le long du convoyeur et dont les opérations de fabrication nécessitent des temps différents, plus ou moins longs. Les différences de temps entre les opérations imposent des vitesses de passage différentes selon les opérations. Il est aussi préféré d'augmenter la vitesse de convoyage d'une charge lorsque la charge est transportée d'une zone de fabrication à une autre. C'est particulièrement le cas pour la fabrication de véhicules automobiles.

Le document CN 201031074 prévoit un palonnier capable de se lier à un autre palonnier de manière amovible par un attelage. L'attelage est constitué d'un crochet et d'un barreau d'accroche correspondant. Un tel attelage ne transmet pas bien les efforts de traction/compression d'un premier train à un deuxième train attelé au premier. Le galet à friction, entraînant le premier train, roule sur le palonnier, les efforts de friction transmis au deuxième train passent alors par l'attelage. Dans ce document, la transmission des efforts entre les deux trains par l'attelage tend à désengager l'attelage, posant des problèmes de sécurité d'utilisation du convoyeur. En outre, l'attelage illustré sur ce document peut difficilement suivre les courbes verticales le long du convoyeur.

Le document US 5 209 363 A prévoit un couplage avec deux parties de couplage pour relier des barres de transport entre elles, les barres de transport présentant des surfaces pour leur entrainement par friction. Toutefois le couplage décrit par ce document peut difficilement suivre des courbes verticales.

Il existe donc un besoin d'un système de convoyage à friction, plus sûr et limitant la multiplication des points d'entraînement, tout en assurant l'indépendance des charges convoyées.

Pour cela, l'invention propose un attelage comprenant une bande de roulement pour galet à friction comportant une première partie et une deuxième partie ; des organes d'attache de manière amovible de la première partie de la bande de roulement à la deuxième partie de la bande roulement ; la bande de roulement étant continue, les organes d'attache étant intégrés dans la bande de roulement ; la première partie et la deuxième partie étant articulées entre elles autour d'un axe d'articulation orthogonal à la bande de roulement.

Selon un autre aspect, un des organes d'attache est un barreau, et dans lequel un autre des organes d'attache est un crochet d'attache au barreau.

Selon un autre aspect, le barreau est cylindrique et est un axe d'articulation de l'attelage.

Selon un autre aspect, des premiers organes d'attache sont fixés à la première partie de la bande de roulement de manière articulée en rotation autour d'un axe d'articulation orthogonal à la bande de roulement.

Selon un autre aspect, l'attelage comprend un galet d'actionnement des organes d'attache, le galet étant déporté de la bande de roulement.

Selon un autre aspect, des galets de guidage en introduction des première et/ou deuxième parties de la bande de roulement de l'attelage dans un convoyeur à friction sont fixés aux première et deuxième parties de bande de roulement.

Selon un autre aspect, les deux parties de la bande de roulement supportent chacune un organe d'attache et sont reliées chacune à un palonnier.

L'invention propose en outre un train comprenant des palonniers attelés entre eux par un attelage précédemment décrit.

Selon un autre aspect, au moins l'une des deux parties de la bande de roulement de l'attelage est reliée au palonnier de manière articulée autour d'un axe d'articulation orthogonal au plan défini par la direction de la bande de roulement et par la normale de la bande de roulement.

Selon un autre aspect, les palonniers comprenant au moins un chariot de guidage dans des rails de convoyeur à friction.

Selon un autre aspect, le chariot de guidage est monté en .rotation sur l'axe d'articulation orthogonal au plan défini par la direction de la bande de roulement et par la normale de la bande de roulement.

Selon un autre aspect; le train comprend en outre des balancelles suspendues aux palonniers.

L'invention propose en outre un convoyeur à friction du train précédemment décrit, comprenant : des rails dans lesquels roulent les chariots des palonniers ; et au moins un groupe moteur d'entraînement du train, le groupe moteur comprenant au moins un galet à friction ; le train étant entraîné par le roulement du galet sur la bande de roulement.

Selon un autre aspect, le train est suspendu par les chariots dans les rails.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une perspective d'un attelage de palonniers ;
- figure 2, une perspective transparente de l'attelage de palonniers de la figure 1;
- figure 3, une perspective semi-transparente de l'attelage de la figure 1 ;
- figure 4, une perspective d'un palonnier équipé de l'attelage des figures 1 à 3 ;
- figure 5, une perspective d'un convoyeur décrivant une courbe horizontale et suspendant le palonnier de la figure 4 ;
- figure 6, une perspective d'un convoyeur décrivant une courbe horizontale et une courbe verticale ;
- figure 7, une perspective d'un groupe moteur de convoyeur entraînant le palonnier selon la figure 4 ;
- figure 8, une perspective du groupe moteur de convoyeur de la figure 7 prise de l'autre côté par rapport au convoyeur.

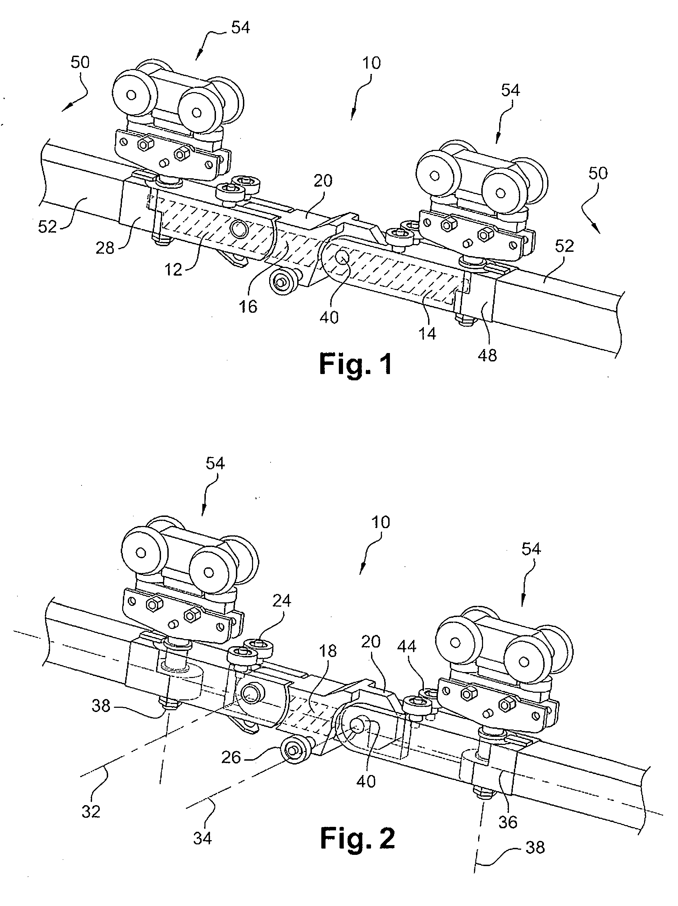

En référence à la figure 1, l'invention se rapporte à un attelage 10 comprenant une bande de roulement 16 pour un galet à friction. La bande de roulement 16 comporte une première partie 12 et une deuxième partie 14. L'attelage 10 comprend en outre des organes 20 et 40 d'attache de la première partie 12 à la deuxième partie 14 de la bande de roulement 16.

La bande de roulement 16 est continue pour permettre l'entraînement de l'attelage 10 par un convoyeur muni de galets à friction. La continuité de la bande de roulement 16 est appréciée par rapport au roulement du galet à friction en contact sur la bande de roulement 16. La continuité de la bande de roulement 16 est ainsi assurée lorsque le roulement du galet à friction du convoyeur est possible. En d'autres termes le roulement du galet sur la bande de roulement 16 de l'attelage n'impose par l'arrêt ou le ralentissement du convoyage. Le roulement entre la première partie 12 et la deuxième partie 14 est alors le même que le roulement du galet sur l'une des parties uniquement.

Il est ainsi clair que la continuité de la bande de roulement 16 est réalisée malgré la présence d'interstices entre la première partie 12 et la deuxième partie 14. L'essentiel est que les interstices entre les parties n'empêchent pas le roulement du galet à friction, et donc n'empêche pas l'entraînement de l'attelage 10 dans le convoyeur à friction. Les dimensions des interstices sont ainsi plus petites que les dimensions du galet à friction adapté à rouler sur la bande de roulement 16.

L'utilisation de l'attelage 10 pour le convoyage de charges dans le convoyeur à friction permet d'augmenter la distance maximale entre les galets à friction du convoyeur. En effet le train, réunion des différents palonniers attelés entre eux, a alors une longueur importante, et la présence d'un galet à friction sur l'un des palonniers du train peut suffire à entraîner tous les autres palonniers du train. L'augmentation de la distance maximale entre les galets à friction du convoyeur entraîne une limitation de la multiplication des points d'entraînement, comme les galets à friction, le long du convoyeur.

L'engagement des organes d'attache 20 et 40 est réalisé de manière amovible. Les organes d'attache 20 et 40 peuvent ainsi être engagés ou désengagés. Le convoyage dans le convoyeur de l'attelage 10 ayant des organes 20 et 40 d'attache de manière amovible permet d'augmenter la distance maximale entre deux galets à friction tout en assurant l'indépendance des différents palonniers. En effet l'engagement des organes d'attache 20 et 40 étant amovible, il est facile de séparer l'attelage 10, permettant aux différents palonniers d'avoir le long de leur convoyage des vitesses différentes suivant les zones où les charges se trouvent. L'indépendance des différents palonniers est donc assurée. La désengagement des palonniers peut être fait automatiquement, par exemple sans nécessiter l'intervention d'un opérateur, ou d'un robot manipulateur.

Les organes d'attache 20 et 40 sont de plus intégrés dans la bande de roulement 16. L'intégration des organes d'attache 20 et 40 dans la bande de roulement 16 est caractérisée par le fait que les organes d'attaches 20 et 40 ne sont pas déportés de la bande de roulement 16. Les organes 20 et 40 sont au même niveau que la bande de roulement 16. Les organes 20 et 40 ne sont pas au-dessus ni au-dessous de la bande de roulement 16. En d'autres termes, cela signifie que la projection des organes d'attache 20 et 40 sur le plan défini par la bande de roulement 16 est essentiellement contenue dans la bande de roulement 16. Les organes d'attache 20 et 40 sont essentiellement contenus dans l'épaisseur de la bande de roulement 16. Lorsque la bande de roulement 16 est disposée sur le flanc de l'attelage 10, comme représenté par la figure 1, les organes d'attaches 20 et 40 sont alors essentiellement contenus dans la section de l'attelage 10.

Les organes d'attaches 20 et 40 transmettent les efforts exercés par un galet à friction sur la bande de roulement 16 d'une partie à l'autre. L'intégration des organes d'attache 20 et 40 est aussi caractérisée par le fait que les efforts transmis entre les deux parties 12 et 14 de la bande de roulement 16 passent essentiellement dans le volume d'extrusion de la bande de roulement 16. Les efforts transmis d'une partie, 12 ou 14, à l'autre, 14 ou 12 passent essentiellement dans l'épaisseur de la bande de roulement 16.

Dans le cas où les organes d'attaches sont déportés de la bande de roulement 16, les efforts transmis entre les deux parties de la bande de roulement 16 passent en dehors de la bande de roulement 16. Les efforts provenant de la friction de galets à friction, passent d'une partie à l'autre en se déportant hors de la bande de roulement 16. Un tel déport des efforts constitue un bras de levier pour les efforts transmis. Il se crée un moment selon un axe de direction normale à la bande de roulement 16. Ce moment tend alors à rompre la continuité de la bande de roulement 16 lors du convoyage de l'attelage 10 par friction. Une telle rupture de continuité de la bande de roulement 16 pose des problèmes de sécurité.

L'intégration des organes d'attaches 12 et 14 dans la bande de roulement 16 fait passer les efforts transmis entre les deux parties 12 et 14 dans la bande de roulement 16. Il n'y a alors pas d'apparition de bras de levier entre la création des efforts par le galet à friction sur la bande de roulement 16 et la transmission de ces efforts entre les deux parties 12 et 14. Les efforts transmis ne tendent pas à rompre la continuité de la bande de roulement 16 lors du convoyage de l'attelage 10 par friction.

L'invention permet en définitive d'obtenir un système de convoyage à friction, plus sûr, limitant la multiplication des points d'entraînement, tout en assurant l'indépendance des charges convoyées.

Nous supposerons dans la suite de la description, sans limiter la portée de l'invention ou de son exposé, que la bande de roulement 16 s'étend selon un plan vertical, comme illustrée par la figure 1. La direction de la bande de roulement 16 est horizontale, sauf dans le cas de suivi de courbes verticales par l'attelage 10. Les courbes verticales permettent un mouvement descendant ou ascendant des palonniers. De telles courbes connaissent des dénivelées, des inclinaisons.

En référence à la figure 2, la première partie 12 et la deuxième partie 14 sont articulées entre elles autour d'un axe d'articulation 32 ou 34. L'axe d'articulation 32 ou 34 est orthogonal à la bande de roulement 16. Sur la figure 2, l'axe d'articulation 32 ou 34 est supposé horizontal. Ainsi lors du suivi de courbes verticales par l'attelage 10, la première partie 12 de bande de roulement 16 a une inclinaison différente de la deuxième partie 14. Une telle articulation permet alors le suivi de courbes verticales par l'ensemble de l'attelage 10.

Le convoyage de charges le long de courbes verticales est particulièrement utile pour le convoyage en environnement restreint, par exemple en usine. Un tel convoyage est encore utile lorsque les charges convoyées sont des objets fabriqués le long du convoyeur et dont les opérations de fabrication nécessitent que l'objet fabriqué le soit à différentes hauteurs. Il s'agit souvent de questions d'ergonomie pour les opérateurs. Il est aussi préférable, pour des questions d'encombrement au sol, d'augmenter la hauteur de convoyage d'une charge lorsque la charge est transportée d'une zone de fabrication à une autre. C'est particulièrement le cas pour la fabrication de véhicules automobiles.

L'axe d'articulation 32 ou 34 est de préférence intégré dans la bande de roulement 16. L'axe d'articulation 32 ou 34 n'est alors pas déporté de la bande de roulement 16. Cela signifie qu'il existe un point d'intersection entre l'axe d'articulation 32 ou 34 et la bande de roulement 16. Ce cas est celui de la figure 2.

Comme dans le cas de l'intégration des organes d'attaches 20 et 40, l'intégration de l'axe d'articulation 32 ou 34 dans la bande de roulement 16 permet de faire passer les efforts des deux côtés de l'articulation sans créer de moment tendant à rompre la continuité de la bande de roulement 16. En effet lorsque l'attelage 10 est entraîné dans des dénivelés verticaux, les efforts transmis entre les parties de la bande de roulement 16 ne créent pas de moment au niveau des organes d'attache 20 et 40.

En référence à la figure 2, un des organes d'attache 20 et 40 peut être un barreau 40, et un autre des organes d'attache 20 et 40 peut être un crochet 20 d'attache au barreau 40. Le crochet 20 et le barreau 40 permettent une conception simple et économique d'organes d'attaches 20 et 40. Le barreau 40 et le crochet 20 permettent la transmission dans les deux sens des efforts exercés par un galet à friction sur la bande de roulement 16. En effet si le galet à friction roule sur la première partie 12 de bande de roulement 16, le crochet 20 tire le barreau 40 et transmet les efforts de la première partie 12 à la deuxième partie 14. Si le galet à friction roule sur la deuxième partie 14 de bande de roulement 16, le barreau 40 pousse le crochet 20 et transmet les efforts de la deuxième partie 14 à la première partie 12. L'entraînement de l'attelage 10 par un galet à friction est alors réalisé même quand le galet à friction ne roule que sur une des parties de la bande de roulement 16.

En référence à la figure 2 le barreau 40 peut être cylindrique. La symétrie de révolution du barreau 40 cylindrique autorise l'utilisation du barreau 40 comme un axe d'articulation 34 de l'attelage 10. Cet axe d'articulation 34 est dans le cas de la figure 2, un axe orthogonal à la bande de roulement 16.

Les premiers organes d'attaches 20 peuvent être fixés à la première partie 12 de la bande de roulement 16. En référence à la figure 2, la fixation des premiers organes 20 à la première partie 12 peut être articulée en rotation autour de l'axe 32.

Suivant les modes de réalisation, l'attelage 10 peut ne comprendre qu'un seul axe d'articulation 32 ou 34 orthogonal à la bande de roulement 16. L'unique axe d'articulation 32 et 34 peut avantageusement être un axe ayant déjà une fonction. Ceci permet une simplification importante de l'attelage 10. Une telle simplification de l'attelage 10 engendre des gains en coût, en conception et en remplacement d'un tel attelage 10.

L'unique axe d'articulation 32 ou 34 est par exemple l'axe d'articulation 34 formé par le barreau cylindrique 40 ou l'axe d'articulation 32 de la fixation des premiers organes 20 d'attache à la première partie 12.

L'attelage 10 peut comprendre plusieurs axes d'articulation 32 ou 34 orthogonaux à la bande de roulement 16. La pluralité d'axes d'articulation 32 ou 34 permet un meilleur suivi des courbes verticales par l'attelage 10. Le rayon de courbure minimum admissible par l'attelage 10 est alors diminué.

La pluralité d'axes d'articulation 32, 34 peut comporter l'axe d'articulation 34 formé par le barreau cylindrique 40 et l'axe d'articulation 32 de la fixation des premiers organes 20 d'attache à la première partie 12. Ceci engendre une simplification importante de l'attelage 10.

En référence à la figure 2, les premiers organes d'attaches 20 peuvent comprendre une troisième partie 18 de la bande de roulement 16. La continuité de la bande de roulement 16 entre la première partie 12 et la deuxième partie 14 est réalisée par les premiers organes d'attaches 20. La réalisation des organes d'attaches 20 et 40 est ainsi plus aisée, la conception des organes d'attaches 20 et 40 ne gênant pas la continuité de bande de roulement 16.

La présence d'une partie 18 de la bande roulement 16 sur un des organes d'attaches 20 ou 40 permet aussi de s'assurer que les organes d'attaches 20 et 40 sont bien intégrés dans la bande de roulement 16.

En référence à la figure 2, l'attelage 10 peut comprendre un galet 26 d'actionnement des organes d'attache 20 et 40. Le galet 26 est déporté de la bande de roulement 16, i.e. l'axe de rotation du galet 26 sur lui-même n'a pas de point d'intersection avec la bande de roulement 16. Le galet 26 peut actionner les organes d'attache 20 et 40 en désengagement l'un par rapport à l'autre. Le galet 26 peut encore actionner les organes d'attache 20 et 40 en maintien de l'engagement des organes 20 et 40 entre eux. Le galet 26 peut enfin actionner les organes d'attache 20 et 40 en engagement entre eux.

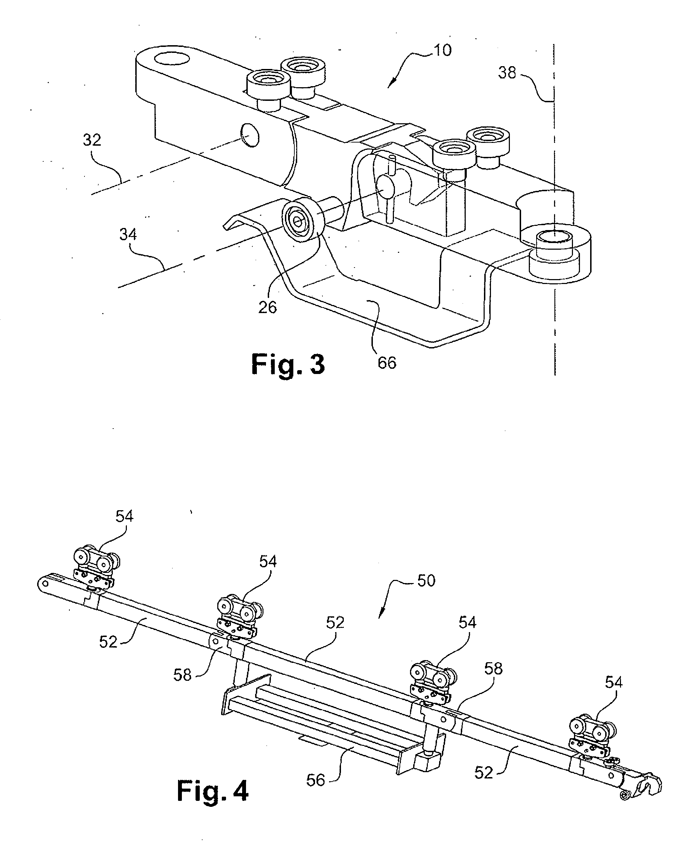

Le galet 26 d'actionnement permet ainsi de piloter l'engagement des organes d'attache 20 et 40. Ce pilotage peut alors être réalisé automatiquement avec un entraînement à friction de l'attelage 10. Ainsi en référence à la figure 3, le galet 26 peut être un suiveur de la came 66. Par exemple, la came 66 est fixée sur le convoyeur. Lorsque la came 66 présente une partie ascendante, le galet d'actionnement 26 monte alors sur la partie ascendante de la came 66 et entraîne l'organe d'attache 20 dans un mouvement ascendant.

La réalisation d'un tel mouvement ascendant par l'organe d'attache 20 peut alors permettre de le désengager de l'organe d'attache 40. Ainsi dans le cas où un organe d'attache est un barreau 40 et où un organe d'attache est un crochet 20 d'attache au barreau 40, tel que représenté figure 3, le mouvement ascendant du crochet 20 permet son désengagement du barreau 40. Le galet 26 est alors un moyen de pilotage automatique du désengagement des organes d'attache 20 et 40 de l'attelage 10.

Particulièrement lorsque le crochet 20 est fixé à la première partie 12 de la bande de roulement 16 de manière articulée en rotation autour de l'axe 32, l'utilisation d'un galet 26 d'actionnement est facilitée. En effet le mouvement ascendant du galet 26 roulant sur la came 66 entraîne alors le crochet en rotation autour de l'axe 32. Ceci provoque le désengagement des organes d'attaches 20 et 40. La conception d'un tel attelage 10 est alors simple tout en assurant un grand nombre de fonctionnalités utiles au convoyage par friction.

La came 66 peut aussi être au dessus du galet 26 et le maintenir en position basse, i.e. la position où les organes d'attaches 20 et 40 sont engagés entre eux. Le maintien d'une telle position basse pour le galet 26 contribue au maintien de l'attelage 10. Ce maintien de l'attelage 10 est particulièrement utile lorsque l'attelage 10 suit une courbe verticale. Dans le mode de réalisation représenté figure 3, le suivi d'une courbe verticale par l'attelage 10 peut entraîner une rotation de la première partie 12 de bande de roulement 16 par rapport à la deuxième partie 14 de bande de roulement 16. Cette rotation des parties de bande de roulement 16 se fait alors par rapport à l'axe 34. Le crochet 20 peut avoir alors tendance à se détacher du barreau 34 en fonction de sa géométrie. L'utilisation du galet 26 d'actionnement permet le maintien de l'engagement des organes d'attache 20 et 40 ce qui permet alors de suivre une courbe verticale sans désattelage de l'attelage 10.

Le déport du galet 26 de la bande de roulement 16 permet d'éviter que le galet 26 ne gêne le roulement sur la bande de roulement 16 des galets à friction entraînant l'attelage 10.

En référence à la figure 2, l'attelage 10 peut comprendre des galets, 24 et 44, de guidage en introduction des première 12 et/ou deuxième 14 parties de la bande de roulement 16 de l'attelage 10 dans un convoyeur. En effet les galets de guidage 24 et 44 assurent l'introduction de chaque partie, 12 ou 14, de bande de roulement 16 de l'attelage 10 dans le convoyeur à friction. Ces galets 24 et 44 empêchent que les parties 12 ou 14 de bande de roulement 16 s'écartent des galets d'entraînement à friction.

Les galets de guidages 24 et 44 sont de préférence fixés à la fois sur la première partie 12 de bande de roulement 16 et sur la deuxième partie 14 de bande de roulement 16. Ainsi la première partie 12 de la bande roulement 16 peut être guidée en introduction dans un convoyeur sans être attachée à la deuxième partie 14 de la bande de roulement 16. De même, inversement la deuxième partie 14 de la bande roulement 16 peut être guidée en introduction dans un convoyeur sans être attachée à la première partie 12 de la bande de roulement 16.

Selon la figure 2 les galets de guidage 24 et 44 guident les parties 12 et 14 de bande de roulement 16 dans un direction latérale, i.e. dans une direction orthogonale à la bande de roulement 16.

En référence à la figure 2, les deux parties, 12 et 14, de la bande de roulement 16 peuvent supportées chacune l'un des organes d'attache 20 ou 40. En référence à la figure 1, les deux parties, 12 et 14, peuvent de plus être reliées chacune à un palonnier 50. Le palonnier 50 peut comprendre des barres 52 de palonniers 50, les extrémités de barres 52 de palonniers 50 permettant de relier les palonniers 50 aux parties 12 et 14. Le palonnier 50, ou les barres 52 de palonniers, peuvent être pourvus à leurs extrémités d'une interface, 28 ou 48, de fixation avec une des deux parties, 12 et 14, de la bande de roulement 16.

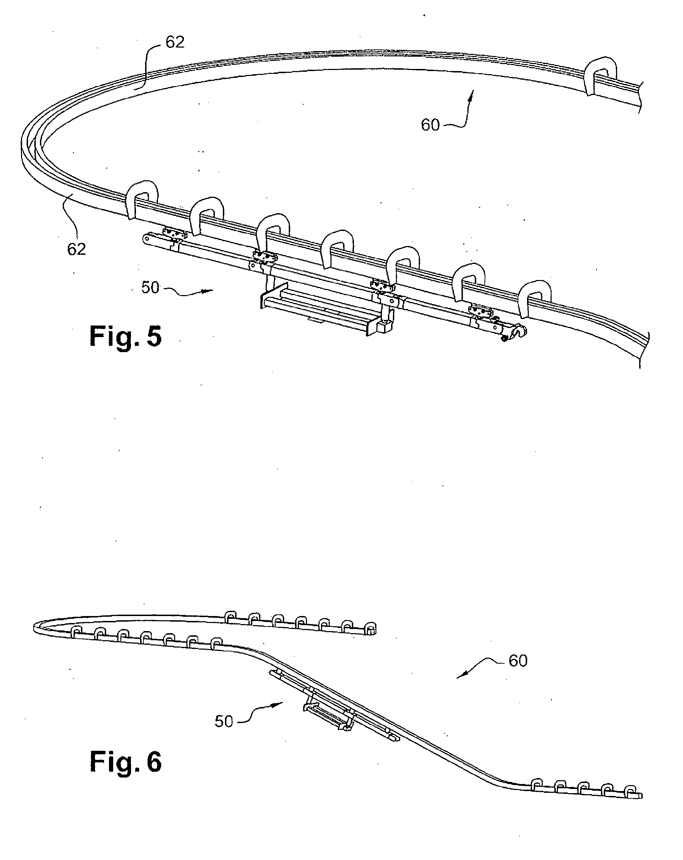

En référence à la figure 4, le palonnier 50 peut comprendre au moins un chariot 54. Le chariot 54 guide le palonnier 50 dans des rails 62 d'un convoyeur 60 représenté figure 5. Le convoyage du palonnier 50 dans le convoyeur 60 est ainsi guidé par les rails 62. Le palonnier peut comprendre de préférence deux chariots de guidage disposés par exemple chacun à une des extrémités du palonnier.

En référence à la figure 4, le palonnier 50 peut comprendre plusieurs barres 52 de palonniers 50 articulées entre.elles par des articulations 58. Une telle structure de palonnier 50 permet le suivi de courbes verticales et horizontales, représentées figure 6, par le palonnier 50 lui-même, i.e. indépendamment de l'attelage 10.

Le palonnier 50 prolonge la bande de roulement 16 sur l'ensemble de ses éléments, dont les barres 52 de palonniers 50. Ainsi les barres 52 de palonniers et les articulations 58 peuvent prolonger la bande de roulement 16. Un tel prolongement de la bande de roulement 16 permet aux galets de friction d'un convoyeur 60 à friction d'entraîner le palonnier 50 sur toute sa longueur et de façon continue.

En référence à la figure 5, le palonnier 50 peut en outre comprendre une balancelle 56 suspendue. La balancelle permet alors de porter la charge convoyée avec une plus grande stabilité du train que les convoyeurs à friction dans lesquels les balancelles sont sur les palonniers 50. La suspension profite de la gravité pour stabiliser la balancelle 56 dans son convoyage.

L'assemblage d'un palonnier 50 avec l'attelage 10 permet de cumuler les avantages de l'attelage 10 précédemment décrit avec ceux du palonnier 50.

Le chariot de guidage 54 peut être monté en rotation sur l'axe d'articulation 38 orthogonal au plan défini par la direction 36 de la bande de roulement 16 et par la normale 32 de la bande de roulement 16. La fixation des palonniers 50 avec les deux parties, 12 et 14, de la bande de roulement 16 partage alors le même axe d'articulation orthogonal 38, permettant de simplifier la conception de l'assemblage d'un palonnier 50 avec l'attelage 10.

L'invention propose aussi un train comprenant des palonniers 50 attelés entre eux par un des attelages 10 décrits précédemment. La figure 1 montre alors le train de palonniers au niveau d'un de ses attelages 10 en position d'engagement. L'utilisation de l'attelage 10 pour la constitution de train permet de prolonger la bande de roulement 16 des palonniers 60 par la bande de roulement 16 de l'attelage. L'entraînement du train dans un convoyeur 60 à friction est alors continu.

De plus l'attelage 10 est amovible. L'utilisation de l'attelage 10 pour la constitution de train permet encore de conserver l'indépendance des palonniers 50. Les palonniers 50 peuvent être convoyés séparément en fonction des différentes zones le long du convoyeur.

Un tel train de palonniers 50 attelés par l'attelage 10 permet encore le suivi de courbes verticales le long du convoyeur 60 sans rupture de la continuité de la bande de roulement d'un galet à friction.

Le train peut plus particulièrement être articulé autour d'un axe d'articulation 38 orthogonal au plan défini par la direction 36 de la bande de roulement 16 et par la normale de la bande de roulement 16. Un tel plan est ici supposé être un plan horizontal. Sur la figure 2, l'axe 38 est vertical. Une telle articulation du train peut être due aux articulations 58 du palonnier 50 ou encore au lien de l'attelage 10 avec les différents éléments du train.

Ainsi au moins l'une des deux parties de la bande de roulement 16 de l'attelage 10 peut être reliée au palonnier 50 de manière articulée autour de l'axe d'articulation 38 .

De tels articulations permettent le suivi de courbes horizontales, représentées figures 5 et 6 par le train suivant le convoyeur 60.

Les palonniers 50 composant le train comprennent de préférence un chariot de guidage 54 dans des rails 62 de convoyeur 60. Ce chariot de guidage 54 peut être monté en rotation sur l'axe d'articulation 38. Le train suit alors mieux les courbes horizontales du convoyeur 60.

Le train peut comprendre en outre des balancelles 56 suspendues aux palonniers 50.

L'invention se rapporte encore à un convoyeur à friction 60 de trains précédemment décrit. Le convoyeur comprend des rails 62 dans lesquels roulent les chariots 54 des palonniers 50. Les rails 62 sont des rails de guidage du train dans le convoyeur 60.

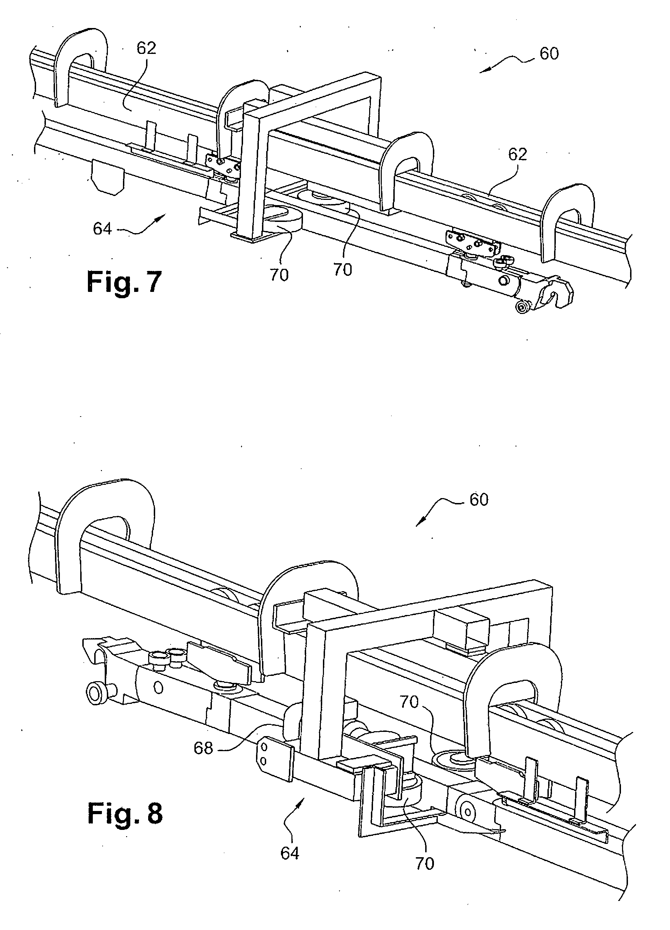

En référence à la figure 7, le convoyeur 60 comprend en outre au moins un groupe moteur 64 d'entraînement du train. Le convoyeur peut comprendre plusieurs groupes moteurs en fonction de la distance de convoyage par rapport à la longueur d'un palonnier 50 et/ou de la charge convoyé. Le groupe moteur 64 comprend au moins un galet 70 à friction. Le train est alors entraîné par le roulement du galet 70 sur la bande de roulement 16 des palonniers 50 et sur la bande de roulement 16 de l'attelage 10. Le groupe moteur peut être un groupe moteur multi-roues, c'est-à-dire avec plusieurs galets 70. Par exemple le groupe moteur peut comprendre trois galets à friction 70 de chaque côté du palonnier 50 entraîné. Le palonnier 50 est alors entraîné par des galets 70 roulant sur deux bandes de roulement 16 du palonnier 50. Les deux bandes de roulement 16 sont de chaque côté du palonnier 50.

En référence à la figure 8, le groupe moteur 64 peut comprendre un moteur 68 d'entraînement des galets à friction 70 en rotation sur eux-mêmes. Un moteur 68 peut entraîner plusieurs galets à friction 70 à l'aide de systèmes d'engrenages ou de courroies. Un même groupe moteur 64 peut comprendre plusieurs moteurs 68.

L'utilisation du convoyeur 60 pour convoyer un train attelé avec l'attelage 10 permet un plus grand espacement des éléments d'entraînement par friction, i.e. des groupes moteur 60. On peut par exemple disposer une cinquantaine de groupes moteur 64 pour un convoyage sur 200m. On divise ainsi le nombre de groupes moteur 64 par deux en comparaison avec un convoyage d'attelage classique.

Un tel convoyeur 60 peut convoyer un train attelé avec l'attelage 10 avec, par exemple, une force de traction sur les palonniers de 5T. Les palonniers 50 peuvent par ailleurs être chargés, par exemple, à 3,5T.

Les vitesses de convoyages pour un tel convoyeur 60 peuvent alors couvrir une large plage de allant de 0 à 100m par minute.

Une vitesse rapide est par exemple utilisée pour l'acheminement d'une charge d'un lien à l'autre (transferts rapides) et une vitesse lente utilisée pour le positionnement ou la réalisation d'une opération sur les charges par des opérateurs (accostages précis).

Un tel convoyeur 60 peut faire suivre à un train attelé avec l'attelage 10 des dénivelés de l'ordre par exemple de 500 à 4500 mm.

Le convoyeur à friction 60 peut par ailleurs être un convoyeur mixte friction/à chaîne permettant de combiner les avantages des deux systèmes. On dispose des butées d'entraînement pour taquets de chaîne sur les chariots 54 des palonniers 50, permettant la mixité du système.

Le convoyeur 60 peut suspendre le train par les chariots 54 dans les rails 62. Un convoyeur 60 à friction suspendant le train permet une plus grande stabilité du train par rapport au convoyeur 60 à friction dans lesquels les chariots 54 sont situés en dessous du train. Le convoyeur 60 à suspension profite de la gravité pour stabiliser le train dans son convoyage. Le convoyeur 60 est alors aussi appelé convoyeur aérien.

## Revendications

1. Un attelage (10) comprenant :
- une bande de roulement (16) pour galet à friction (70) comportant une première partie (12) et une deuxième partie (14), la première partie (12) et la deuxième partie (14) étant articulées entre elles autour d'un axe d'articulation (32, 34) orthogonal à la bande de roulement (16) ;
- des organes (20, 40) d'attache de manière amovible de la première partie (12) de la bande de roulement (16) à la deuxième partie (14) de la bande roulement (16) ;
la bande de roulement (16) étant continue, les organes d'attache (20, 40) étant intégrés dans la bande de roulement (16).

2. L'attelage selon la revendication 1, dans lequel un des organes d'attache (20, 40) est un barreau (40), et dans lequel un autre des organes d'attache (20, 40) est un crochet d'attache (20) au barreau (40).

3. L'attelage selon la revendication 2, dans lequel le barreau (40) est cylindrique et est un axe d'articulation (34) de l'attelage (10).

4. L'attelage selon l'une des revendications 1 à 3, dans lequel des premiers organes d'attache (20) sont fixés à la première partie (12) de la bande de roulement (16) de manière articulée en rotation autour d'un axe d'articulation (32) orthogonal à la bande de roulement (16).

5. L'attelage selon l'une des revendications 1 à 4, comprenant un galet (26) d'actionnement des organes d'attache (20, 40), le galet (26) étant déporté de la bande de roulement (16).

6. L'attelage selon l'une des revendications 1 à 5, dans lequel des galets (24, 44) de guidage en introduction des première (12) et/ou deuxième (14) parties de la bande de roulement (16) de l'attelage (10) dans un convoyeur à friction (60) sont fixés aux première (12) et deuxième (14) parties de bande de roulement (16).

7. L'attelage selon l'une des revendications 1 à 6, dans lequel les deux parties (12, 14) de la bande de roulement (16) supportent chacune un organe d'attache (20, 40) et sont reliées chacune à un palonnier (50).

8. Un train (50) comprenant des palonniers (50) attelés entre eux par un attelage (10) selon l'une des revendications 1 à 7.

9. Le train selon la revendication 8, dans lequel au moins l'une des deux parties (12, 14) de la bande de roulement (16) de l'attelage (10) est reliée au palonnier (50) de manière articulée autour d'un axe d'articulation (38) orthogonal au plan défini par la direction (36) de la bande de roulement (16) et par la normale de la bande de roulement (16).

10. Le train selon la revendication 9, les palonniers (50) comprenant au moins un chariot de guidage (54) dans des rails (62) de convoyeur à friction (60).

11. Le train selon la revendication 10, dans lequel le chariot de guidage (54) est monté en rotation sur l'axe d'articulation (38) orthogonal au plan défini par la direction (36) de la bande de roulement (16) et par la normale de la bande de roulement (16).

12. Le train selon l'une des revendications 9 à 11, comprenant en outre des balancelles (56) suspendues aux palonniers (50).

13. Convoyeur à friction (60) apte à convoyer le train selon la revendication 12, comprenant :
- des rails (62) dans lesquels roulent les chariots (54) des palonniers (50) ; et
- au moins un groupe moteur (64) d'entraînement du train, le groupe moteur (64) comprenant au moins un galet à friction (70) ;
le train étant entraîné par le roulement du galet (70) sur la bande de roulement (16).

14. Convoyeur selon la revendication 13, dans lequel le train est suspendu par les chariots (54) dans les rails (62).

## Patentansprüche

1. Anhängevorrichtung (10), umfassend:
- ein Laufband (16) für eine Reibwalze (70), umfassend einen ersten Teil (12) und einen zweiten Teil (14), wobei der erste Teil (12) und der zweite Teil (14) miteinander um eine Gelenkachse (32, 34) orthogonal zum Laufband (16) angelenkt sind;
- Elemente (20, 40) zur lösbaren Befestigung des ersten Teils (12) des Laufbandes (16) am zweiten Teil (14) des Laufbandes (16);
wobei das Laufband (16) durchgehend ist und wobei die Befestigungselemente (20, 40) in das Laufband (16) integriert sind.

2. Anhängevorrichtung nach Anspruch 1, bei der eines der Befestigungselemente (20, 40) ein Balken (40) ist, und bei der ein anderes der Befestigungselemente (20, 40) ein Haken (20) zur Befestigung am Balken (40) ist.

3. Anhängevorrichtung nach Anspruch 2, bei der der Balken (40) zylindrisch ist und eine Gelenkachse (34) der Anhängevorrichtung (10) ist.

4. Anhängevorrichtung nach einem der Ansprüche 1 bis 3, bei der erste Befestigungselemente (20) am ersten Teil (12) des Laufbandes (16) drehgelenkig um eine Gelenkachse (32) orthogonal zum Laufband (16) befestigt sind.

5. Anhängevorrichtung nach einem der Ansprüche 1 bis 4, umfassend eine Walze (26) zur Betätigung der Befestigungselemente (20, 40), wobei die Walze (26) zum Laufband (16) versetzt ist.

6. Anhängevorrichtung nach einem der Ansprüche 1 bis 5, bei der die Führungswalzen (24, 44) zur Einführung der ersten (12) und/oder zweiten (14) Teile des Laufbandes (16) der Anhängevorrichtung (10) in ein Friktionsförderband (60) an den ersten (12) und zweiten (14) Teilen des Laufbandes (16) befestigt sind.

7. Anhängevorrichtung nach einem der Ansprüche 1 bis 6, bei der die beiden Teile (12, 14) des Laufbandes (16) jeweils ein Befestigungselement (20, 40) tragen und jeweils mit einem Tragrahmen (50) verbunden sind.

8. Zug (50), umfassend Tragrahmen (50), die aneinander durch eine Anhängevorrichtung (10) nach einem der Ansprüche 1 bis 7 angehängt sind.

9. Zug nach Anspruch 8, bei dem mindestens einer der beiden Teile (12, 14) des Laufbandes (16) der Anhängevorrichtung (10) mit dem Tragrahmen (50) gelenkig um eine Gelenkachse (38) orthogonal zu der Ebene, die durch die Richtung (36) des Laufbandes (16) und die Normale des Laufbandes (16) definiert ist, verbunden ist.

10. Zug nach Anspruch 9, wobei die Tragrahmen (50) mindestens einen Führungsschlitten (54) in Schienen (62) eines Friktionsförderbandes (60) umfassen.

11. Zug nach Anspruch 10, bei dem der Führungsschlitten (54) drehbar auf der Gelenkachse (38) orthogonal zu der durch die Richtung (36) des Laufbandes (16) und die Normale des Laufbandes (16) definierten Ebene montiert ist.

12. Zug nach einem der Ansprüche 9 bis 11, ferner umfassend Warenträger (56), die an den Tragrahmen (50) angehängt sind.

13. Friktionsförderband (60), das geeignet ist, den Zug nach dem Anspruch 12 zu befördern, umfassend:
- Schienen (62), in denen die Schlitten (54) der Tragrahmen (50) fahren; und
- mindestens eine Antriebsgruppe (64) zum Antreiben des Zugs, wobei die Antriebsgruppe (64) mindestens eine Friktionswalze (70) umfasst;
wobei der Zug durch das Rollen der Walze (70) auf dem Laufband (16) angetrieben wird.

14. Förderband nach Anspruch 13, bei dem der Zug durch die Schlitten (54) in den Schienen (62) eingehängt ist.

## Claims

1. A coupler (10) comprising:
- a friction roller (70) running surface (16) having a first portion (12) and a second portion (14), the first portion (12) and the second portion (14) being hinged together about an axis of articulation (32, 34) orthogonal to the running surface (16);
- members (20, 40) for releasably attaching the first portion (12) of the running surface (16) to the second portion (14) of the running surface (16);
the running surface (16) being continuous and the attachment members (20, 40) being integrated into the running surface (16).

2. The coupler according to claim 1, wherein one of the attachment members (20, 40) is a bar (40), and wherein another of the attachment members (20, 40) is a hook (20) for engagement with the bar (40).

3. The coupler according to claim 2, wherein the bar (40) is cylindrical and is an axis of articulation (34) of the coupler (10).

4. The coupler according to one of claims 1 to 3, wherein first attachment members (20) are fixed to the first portion (12) of the running surface (16) in an articulated manner rotatively about an axis of articulation (32) orthogonal to the running surface (16).

5. The coupler according to one of claims 1 to 4, comprising a cam actuator (26) for actuating the attachment members (20, 40), the cam actuator (26) being offset from the running surface (16).

6. The coupler according to one of claims 1 to 5, wherein rollers (24, 44) for guiding the introduction of the first (12) and/or second (14) portions of the running surface (16) of the coupler (10) into a friction conveyor (60) are fixed to the first (12) and second (14) portions of the running surface (16).

7. The coupler according to one of claims 1 to 6, wherein the two portions (12, 14) of the running surface (16) each support an attachment member (20, 40) and are each connected to a load bar member (50).

8. A train (50) comprising load bar members (50) coupled together by a coupler (10) according to one of claims 1 to 7.

9. The train according to claim 8, wherein at least one of the two portions (12, 14) of the running surface (16) of the coupler (10) is connected to the load bar member (50) in an articulated manner about an axis of articulation (38) orthogonal to the plane defined by the direction (36) of the running surface (16) and the normal to the running surface (16).

10. The train according to claim 9, the load bar members (50) comprising at least one guide trolley (54) in rails (62) of a friction conveyor (60).

11. The train according to claim 10, wherein the guide trolley (54) is rotatively mounted on the axis of articulation (38) orthogonal to the plane defined by the direction (36) of the running surface (16) and by the normal of the running surface (16).

12. The train according to one of claims 9 to 11, further comprising suspended hangers (56) suspended from the load bar members (50).

13. A friction conveyor (60) capable of conveying the train according to claim 12, comprising:
- rails (62) in which trolleys (54) of the load bar member (50) run, and
- at least one drive unit (64) for driving the train, the drive unit (64) comprising at least one friction roller (70);
the train being driven by the friction roller (70) running on the running surface (16).

14. The conveyor according to claim 13, wherein the train is suspended by the trolleys (54) in the rails (62).
